# EUROPEAN PATENT SPECIFICATION

(11) **EP 2 548 790 B1**
(45) Date of publication and mention of the grant of the patent: **25.12.2013**
(21) Application number: 12177202.4
(22) Date of filing: 20.07.2012
(51) Int. Cl.: B62J 1/12, B62K 19/36

(54) **Scooter saddle opening device**
Vorrichtung zum Öffnen eines Mopedsattels
Dispositif d'ouverture de selle de scooter

(30) Priority: 22.07.2011 TW 100126047
(43) Date of publication of application: 23.01.2013
(73) Proprietor: Kwang Yang Motor Co., Ltd., Kaohsiung City 80794 (TW)
(72) Inventor: Lin, Tsang-Mao, Cambridge, CB1 1AH (GB); Cheng, Hung-Wen, Cambridge, CB1 1AH (GB)
(74) Representative: Horak, Michael

(56) References cited:
- EP-A1- 0 755 853
- EP-A1- 1 864 895

## Description

### (a) Technical Field of the Invention

The present invention generally relates to a scooter comprising a saddle opening device, and more particularly to a saddle opening device that expands the opening angle of a scooter saddle.

### (b) Description of the Prior Art

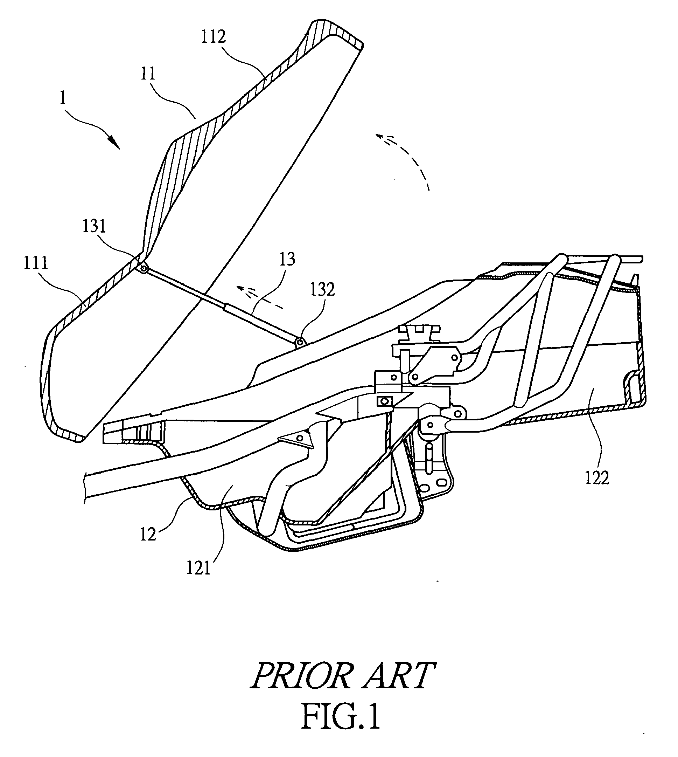

A saddle arranged on a scooter provides a sufficient amount of space for a scooter operator and a passenger and more importantly, the saddle may define a storage space thereunder for storage of articles, such as a helmet and gloves. Such a feature is an important and frequently used structure of the scooter. A commonly adopted arrangement of the saddle is a lifting arrangement, which makes the saddle a cover for the storage box, whereby the saddle may provide a function of sitting in a regular operation and is lifted to open the storage box for depositing or removing articles into or from the storage box. The saddle may then be set back to resume the original condition of closing the storage box. For a large-sized scooter, the saddle is made relatively large and heavy. And, to help the scooter rider to open the saddle, a scooter saddle opening device 1 is provided, which as shown in FIG 1, comprises a saddle 11, a storage box 12, and a pneumatic bar 13. The saddle 11 comprises an operator seat 111 and a passenger seat 112. The storage box 12 forms a front storage space 121 and a rear storage space 122. The pneumatic bar 13 is mounted between the saddle 11 and the storage box 12. The pneumatic bar 13 has an upper mounting end 131 mounted to the underside of the operator seat 111 of the saddle 11 and the pneumatic bar 13 has a lower mounting end 132 fixed between the front storage space 121 and the rear storage space 122. When the saddle 11 is released and lifted upward by an angle, a pre-loading force of the pneumatic bar 13 may then gradually open the saddle so that the saddle 11 may automatically move upward to be set at a predetermined angular position. To close the saddle 11, the saddle 11 is pressed down to allow a saddle lock to get secured.

With the above described arrangement, the conventional scooter saddle opening device 1 may be effective in opening the saddle 11. However, an upper portion of a front section of bottom board of the saddle 11 is fixed to the upper mounting end 131 of the pneumatic bar 13 so that the extension/retraction region of the pneumatic bar 13 is exactly the location of the operator seat 111 of the saddle 11. To accommodate the pneumatic bar 13, the thickness of cushioning substance of the saddle 11 is reduced and this affects the comfortableness of sitting on the saddle 11. Further, the center of gravity of the saddle 11 is close to a geometric center thereof so that the pneumatic bar 13 will encounter a great resistance. Further, the upper mounting end 131 of the pneumatic bar 13 is fixed to the front portion of the saddle 11, so that the saddle 11 can only be opened by a small opening angle. In addition, the pre-loading force of the pneumatic bar 13 may also affect the smoothness of opening operation of the saddle 11 and accessibility of articles stored in the storage box 12.

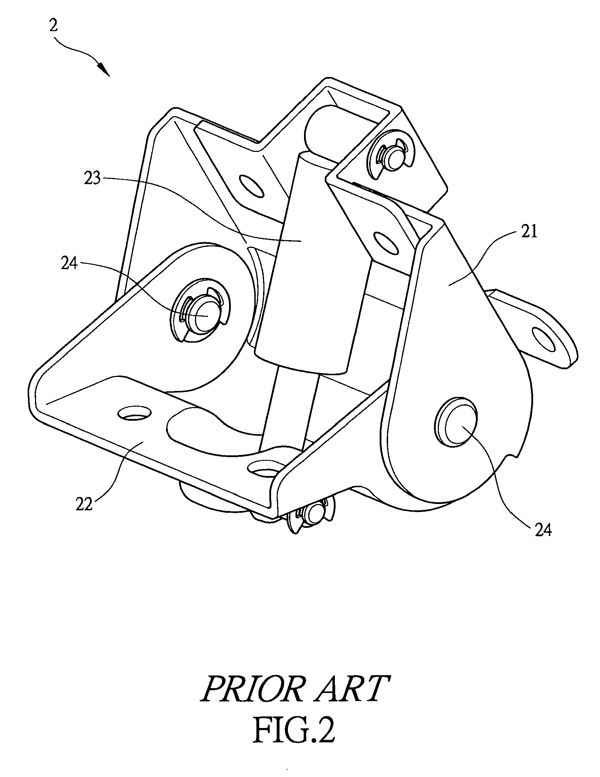

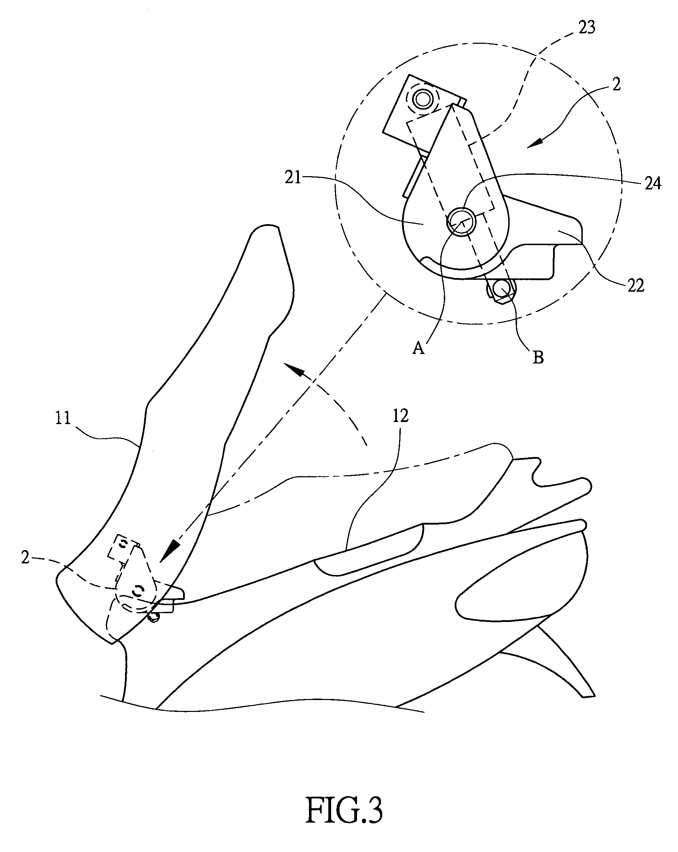

Another scooter saddle opening device 2 is shown in FIGS. 2 and 3, which comprises an upper mounting piece 21, a lower mounting piece 22, and an operation element 23. A pivoting piece 24 is arranged between the upper mounting piece 21 and the lower mounting piece 22. The operation element 23 has an upper end connected to the upper mounting piece 21 and the operation element 23 has a lower end connected to the lower mounting piece 22. The upper mounting piece 21 is fixed to an undersurface of a front end section of the saddle 11 and the lower mounting piece 22 is fixed to a front end section of the storage box 12. With the operation element 23 pushing the upper mounting piece 21, the upper mounting piece 21 is caused to rotate about a pivot center A defined by the pivoting piece 24 to thereby open or close the saddle 11.

However, in the above-described scooter saddle opening device 2, the pivot center A of the upper mounting piece 21 is set at a location that is higher than a lower connection point B where the lower end of the operation element 23 is connected to the lower mounting piece 22, as shown in FIG 3. This imposes severe limitation to the opening angle of the saddle 11, making it extremely inconvenient for the use of the vehicle. Further, the above-described scooter saddle opening device 2 is only fit for small-sized scooters and the application of the scooter saddle opening device 2 is thus limited.

In view of the above discussed drawbacks of the conventional scooter saddle opening devices 1, 2, it is desired to provide an opening device for a saddle 11 located above a storage box 12 that facilitates removal of articles from the storage box 12.

### SUMMARY OF THE INVENTION

The technical solution adopted in the present invention is the scooter comprising a saddle opening device defined in claim 1. The saddle opening device is mounted between a front end section of a saddle of a scooter and a coupling seat of a frame of the scooter. The saddle opening device comprises at least an upper mounting piece, a lower mounting piece, and a driving assembly. The upper mounting piece comprises a fixed section. The fixed section forms fixing holes. A pivotal coupling section extends from an end of the fixed section of the upper mounting piece. The pivotal coupling section has a lower end forming a pivot hole. The fixed section of the upper mounting piece forms a connection hole at connection thereof with the pivotal coupling section. The lower mounting piece comprises a fixed section. The fixed section forms fixing holes. A pivotal coupling section extends from an end the fixed section of the lower mounting piece. The pivotal coupling section forms a connection hole and a pivot hole. The upper mounting piece and the lower mounting piece are rotatably coupled to each other by a pivot pin received through the pivot holes. The upper end section of the driving assembly is connected by a first connection bar to the connection hole of the upper mounting piece. The lower end section of the driving assembly is connected by a second connection bar to the connection hole of the lower mounting piece. The pivot pin is received through the pivot holes of the upper mounting piece and the lower mounting piece and the pivot pin defines a pivot center that is arranged to form a substantially horizontal line with a lower connection point defined by the connection of the lower end section of the driving assembly with the connection hole of the lower mounting piece, whereby the opening angle of the saddle can be expanded to facilitate easiness of accessing an article stored in the storage box.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view showing a conventional scooter saddle opening device.
FIG 2 is a perspective view showing another scooter saddle opening device.
FIG 3 is a schematic view showing an application of FIG 2.
FIG 4 is a side elevational view of a scooter according to the present invention.
FIGS. 5 and 6 are schematic view illustrating an operation of a saddle opening device according to the present invention.
FIG 7 is a side elevational view of the saddle opening device according to the present invention.
FIG 8 is a front view of the saddle opening device according to the present invention.
FIG 9 is a schematic view illustrating removal of a storage box of the saddle opening device according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

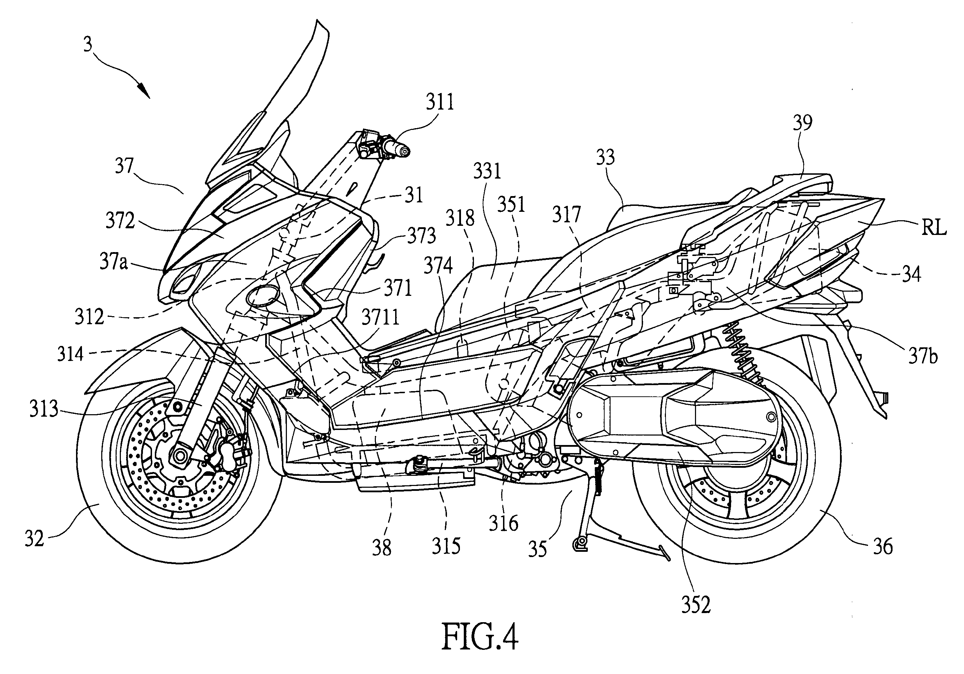

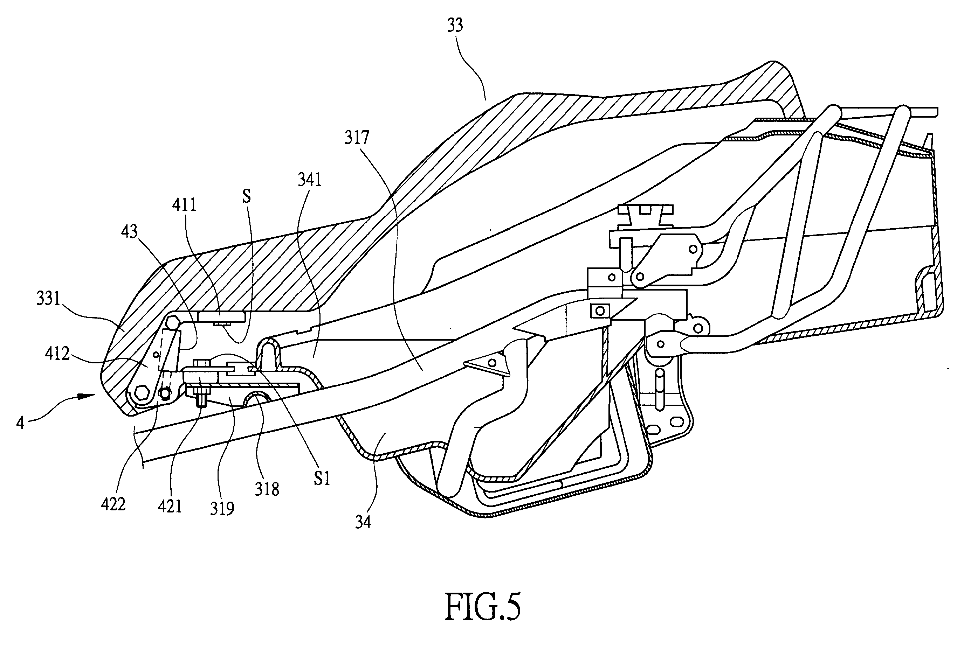

Referring first to FIGS. 4 and 5, the present invention provides a scooter 3, which comprises a frame 31, a front wheel 32, a saddle 33, a storage box 34, a power unit 35, a rear wheel 36, and a casing 37.

The frame 31 has a front end to which a steering handlebar 311 is rotatably mounted. A head tube 312 is mounted below the steering handlebar 311 and a front shock absorber 313 is pivotally mounted below the head tube 312. The front shock absorber 313 is fixed to the front wheel 32. Down tube sections 314 extend from the head tube 312 in a rearward direction of the vehicle body and horizontal tube sections 315 respectively extend from the down tube sections 314 in a rearward direction of the vehicle body and located at two sides of the vehicle body to carry and support front foot rest boards 374. Rising tube sections 316 respectively extend from the horizontal tube sections 315 in a rearward direction and a rear frame 317 extends from the rising tube sections 316 in a rearward direction. A cross tube 318 is arranged in front of the rear frame 317 and a coupling seat 319 is formed on the cross tube 318.

The saddle 33 is arranged above the rising tube sections 316 and the rear frame 317 of the frame 31 to carry a rider. The saddle 33 has a front end section 331 coupled to a saddle opening device 4. The storage box 34 is arranged under the saddle 33. The storage box 34 has a front end section 341 that is coupled to the coupling seat 319 of the cross tube 318. A fuel tank 38 is arranged in front of the storage box 34 and between the front foot rest boards 374. The power unit 35 is arranged under the storage box 34 and the power unit 35 is coupled to the rear wheel 36.

The power unit 35 comprises at least an injection engine 351 and a transmission box 352.

The casing 37 comprises a front cover 37A arranged at the front side of the scooter 3 and side covers 37B. The front cover 37A comprises a knee shield 371 and a front panel 372. The knee shield 371 forms a front storage box 373 facing rearward of the vehicle body. A foot rest section 3711 extends from a lower end of the knee shield 371. The front foot rest boards 374 are connected to the foot rest section 3711 in a rearward direction. The side covers 37B have tail ends to which a tail light assembly RL and a rear carrier rack 39 are mounted.

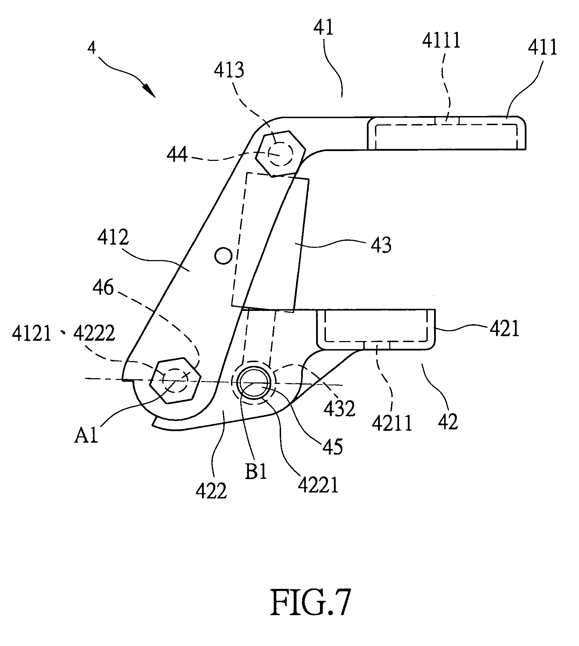

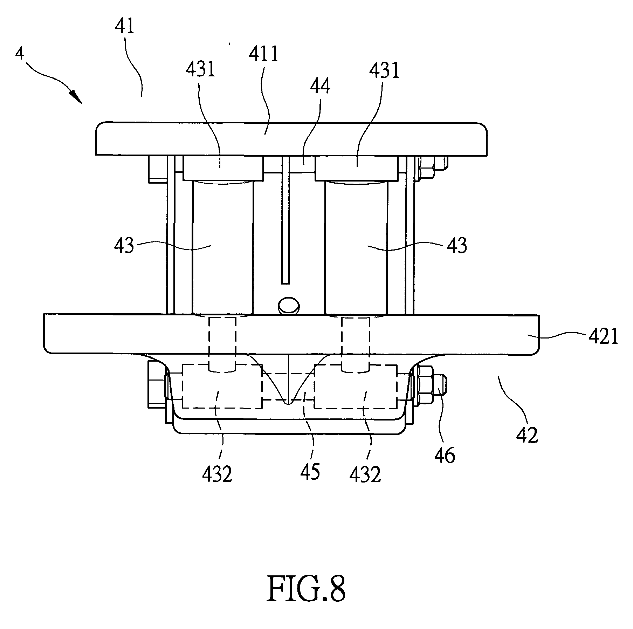

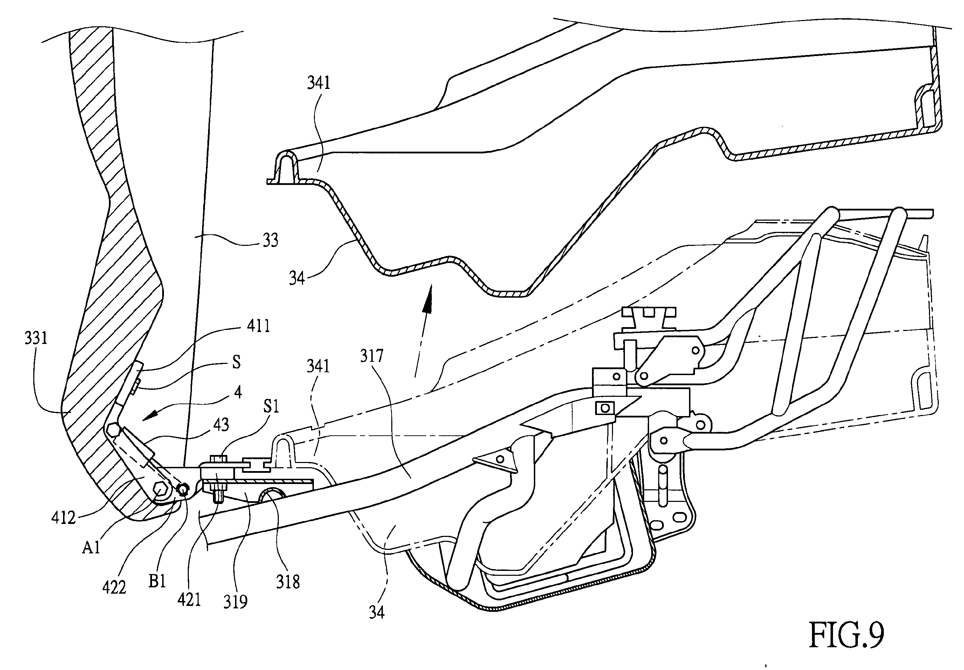

As shown in FIGS. 7, 8, and 9, the saddle opening device 4 comprises at least an upper mounting piece 41, a lower mounting piece 42, and a driving assembly 43. The upper mounting piece 41 comprises a substantially horizontal fixed section 411. The fixed section 411 forms a plurality of fixing holes 411. A pivotal coupling section 412, which is outward inclined, extends downward from one end of the fixed section 411 of the upper mounting piece 41. The pivotal coupling section 412 has a lower end forming a pivot hole 4121. The fixed section 411 of the upper mounting piece 41 forms a connection hole 413 at a connection thereof with the pivotal coupling section 412. The lower mounting piece 42 comprises a substantially horizontal fixed section 421. The fixed section 421 forms a plurality of fixing holes 4211. A pivotal coupling section 422 extends from an end of the fixed section 421 of the lower mounting piece 42. The pivotal coupling section 422 forms a connection hole 4221 and a pivot hole 4222. The driving assembly 43 may comprise two hydraulic cylinders or two pneumatic cylinders. The driving assembly 43 has an upper end section 431 that is connected by a first connection bar 44 to the connection hole 413 of the upper mounting piece 41. The driving assembly 43 has a lower end section 432 that is connected by a second connection bar 45 to the connection hole 4221 of the lower mounting piece 42. The upper mounting piece 41 and the lower mounting piece 42 are rotatably jointed to each other by a pivot pin 46 received through the pivot holes 4121, 4222, whereby the upper mounting piece 41 is allowed to do up and down rotating movement about a pivot center A 1 defined by the pivot pin 46. The pivot center A1 defined by the pivot pin 46 is located substantially on the same horizontal plane with a lower connection point B 1 that is defined by the second connection bar 45 connecting the lower end section 432 of the driving assembly 43 to the connection hole 4221 of the lower mounting piece 42. When the driving assembly 43 is retracted (namely the saddle 33 being not opened), the fixed section 411 of the upper mounting piece 41 and the fixed section 421 of the lower mounting piece 42 are substantially parallel to each other.

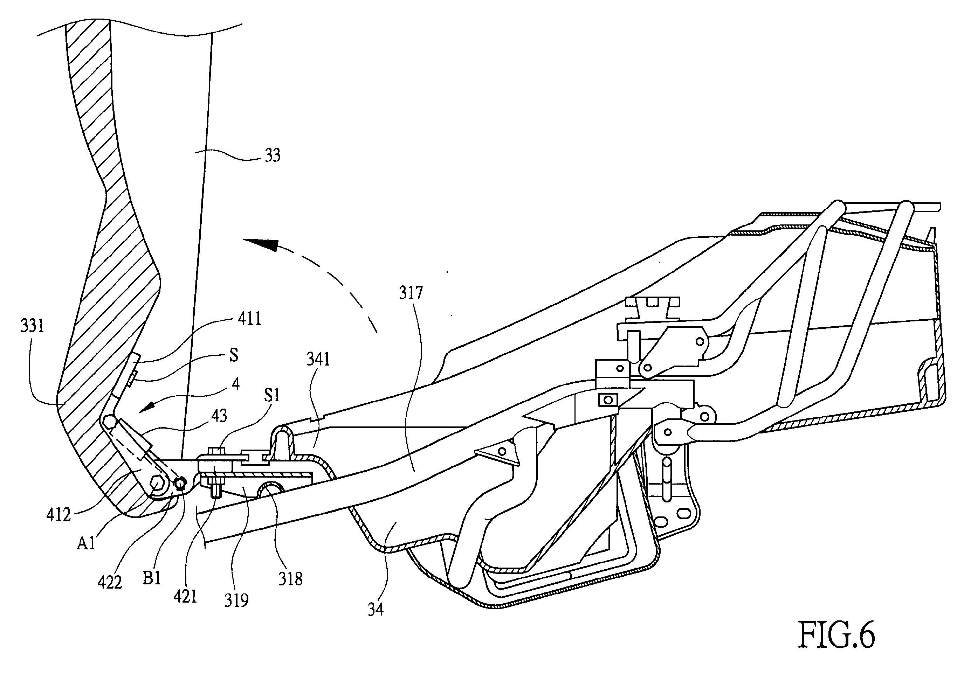

Referring to FIGS. 5, 6, and 9, to practice the present invention, the saddle opening device 4 is fixed to an undersurface of the saddle 33 by threading fasteners S extending through the fixing holes 4111 of the upper mounting piece 41 and also, threading fasteners S 1 are set through the fixing holes 4211 of the lower mounting piece 42 to fix the lower mounting piece 42 to the coupling seat 319 of the cross tube 318 of the frame 31, whereby the saddle opening device 4 is securely mounted between the front end section 331 of the saddle 33 and the coupling seat 319 of the cross tube 318 of the frame 31.

When the saddle 33 is not opened, the driving assembly 43 is in a retracted condition in which the fixed section 411 of the upper mounting piece 41 and the fixed section 421 of the lower mounting piece 42 are in an arrangement of being substantially parallel to each other. When the saddle 33 is released, the saddle 33 is forced by a pre-loading force of the driving assembly 43 to slow move upward. With such an arrangement that the pivot center A 1 defined by the pivot pin 46 of the saddle opening device 4 is set to form a substantially horizontal line with the lower connection point B 1 defined by the second connection bar 45 connecting the lower end section 432 of the driving assembly 43 to the connection hole 4221 of the lower mounting piece 42, the purpose of opening the saddle 33 with reduced effort can be achieved and at the same ensuring an expanded opening angle of the saddle 33.

The efficacy of the present invention is that the pivot center A 1 defined by the pivot pin 46 is arranged on substantially the same horizontal plane with the lower connection point B 1 that is defined by the second connection bar 45 connecting the lower end section 432 of the driving assembly 43 to the connection hole 4221 of the lower mounting piece 42 so that the driving assembly 43 can easily lift the saddle 33 without a great pre-loading force so as to achieve the purpose of opening the saddle 33 and at the same to expand the opening angle of the saddle 33 to facilitate the easiness of article access. Further, the lower mounting piece 42 of the saddle opening device 4 is coupled to the coupling seat 319 of the cross tube 318 of the frame 31 and is not coupled to the storage box 34, whereby when the scooter 3 is subjected to a maintenance operation, the saddle 33 can be lifted to allow the storage box 34 to be removed to facilitate the performance of the maintenance operation without removal of the saddle 33. The maintenance of the scooter 3 is thus made easy.

## Claims

1. A scooter (3) comprising a saddle opening device (4), the saddle opening device (4) being mounted between a front end section (331) of a saddle (33) of the scooter (3) and a coupling seat (319) of a frame (31) of the scooter (3), the saddle opening device (4) comprising at least an upper mounting piece (41), a lower mounting piece (42), and a driving assembly (43);
the upper mounting piece (41) comprising a fixed section (411), the fixed section (411) forming fixing holes (4111), a pivotal coupling section (412) extending from an end of the fixed section (411) of the upper mounting piece (41), the pivotal coupling section (412) having a lower end forming a pivot hole (4121), the fixed section (411) of the upper mounting piece (41) forming a connection hole (413) at connection thereof with the pivotal coupling section (412);
the lower mounting piece (42) comprising a fixed section (421), the fixed section (421) forming fixing holes (4211), a pivotal coupling section (422) extending from an end the fixed section (421) of the lower mounting piece (42), the pivotal coupling section (422) forming a connection hole (4221) and a pivot hole (4222), the upper mounting piece (41) and the lower mounting piece (42) being rotatably coupled to each other by a pivot pin (46) received through the pivot holes (4121, 4222);
the upper end section (431) of the driving assembly (43) being connected by a first connection bar (44) to the connection hole (413) of the upper mounting piece (41), the lower end section (432) of the driving assembly (43) being connected by a second connection bar (45) to the connection hole (4221) of the lower mounting piece (42);
**characterized in that** the pivot pin (46) is received through the pivot holes (4121, 4222) of the upper mounting piece (41) and the lower mounting piece (42) and the pivot pin (46) defines a pivot center (A1) that is arranged to form a substantially horizontal line with a lower connection point (B 1) defined by the connection of the lower end section (432) of the driving assembly (43) with the connection hole (4221) of the lower mounting piece (42).

2. The scooter (3) according to claim 1, wherein the fixed section (411) of the upper mounting piece (41) is substantially parallel to the fixed section (421) of the lower mounting piece (42).

3. The scooter (3) according to claim 1, wherein the pivotal coupling section (412) of the upper mounting piece (41) is set to extend from the end of the fixed section (411) to show an outward inclined configuration.

4. The scooter (3) according to claim 1, wherein the driving assembly (43) comprises two hydraulic cylinders or two pneumatic cylinders.

5. The scooter (3) according to claim 1, wherein the saddle (33) is not coupled to the storage box (34) of the scooter (3).

## Patentansprüche

1. Ein Roller (3) bestehend aus einer Sattelöffnungseinrichtung (4), die Sattelöffnungseinrichtung (4) montiert zwischen einer Frontpartie (331) von einem Sattel (33) des Rollers (3) und einer verbundenen Sitzes (319) von einem Rahmen (31) des Rollers (3), die Sattelöffnungseinrichtung (4) die mindestens eine obere Halterung (41), eine untere Halterung (42), und einen Fahrantrieb (43) enthält;
die obere Halterung (41) bestehend aus einem festen Teil (411), der feste Teil (411) der Befestigungslöcher (4111) hat, ein zentraler Kupplungsteil (412) zur Verlängerung des einen Ende vom festen Teil (411) der oberen Halterung (41), der zentrale Kupplungsteil (412) mit einem unteren Ende das eine Scharnierbohrung (4121) bildet, der feste Teil (411) der oberen Halterung (41) die ein Verbindungsloch (413) bildet bei dessen Verbindung sich der zentrale Kupplungsteil (412) befindet;
die untere Halterung (42) bestehend aus einem festen Teil (421), der feste Teil (421) der Befestigungslöcher (4211) hat, ein zentraler Kupplungsteil (422) zur Verlängerung des einen Ende vom festen Teil (421) der unteren Halterung (42), der Zentrale Kupplungsteil (422) der ein Verbindungsloch (4221) bildet und eine Scharnierbohrung (4222), die obere Halterung (41) und die untere Halterung (42) die drehbar durch ein Drehbolzen (46) miteinander verbunden sind der durch die Scharnierbohrungen (4121, 4222) geführt werden ;
der obere Endabschnitt (431) des Fahrantriebs (43) ist durch eine erste Verbindungsschiene (44) mit der Verbindungsöffnung (413) der oberen Halterung (41) verbunden, der untere Endabschnitt (432) des Fahrantriebs (43) ist durch eine zweite Verbindungsschiene (45) mit der Verbindungsöffnung (4221) der unteren Halterung (42) verbunden;
durch den Drehbolzen (46) gekennzeichnet, werden diese durch die Scharnierbohrungen (4121, 4222) der oberen Halterung (41) empfangen und die untere Halterung (42) und der Drehbolzen (46) definieren einen Drehmittelpunkt (Al) der so ausgelegt ist, dass er eine horizontale Linie mit einem unteren Verbindungspunkt (B 1) bildet, die durch die Verbindung des unteren Endabschnitts (432) des Fahrantriebs (43) mit der Verbindungsöffnung (4221) der unteren Halterung (42) definiert ist.

2. Der Roller (3) nach Anspruch 1, wobei der feste Teil (411) der oberen Halterung (41) im Wesentlichen parallel zum festen Teil (421) der unteren Halterung (42) ist.

3. Der Roller (3) nach Anspruch 1, wobei der zentrale Kupplungsteil (412) der oberen Halterung (41) so ausgelegt ist, dass er vom Ende des festen Teils (411) herausragt um eine nach außen gerichtete Struktur zu bilden.

4. Der Roller (3) nach Anspruch 1, wobei der Fahrantrieb (43) zwei hydraulische oder pneumatische Zylinder beinhaltet.

5. Der Roller (3) nach Anspruch 1, wobei der Sattel (33) mit der Aufbewahrungsbox (34) des Rollers (3) nicht verbunden ist.

## Revendications

1. Un scooter (3) comprenant une selle avec un système d'ouverture (4), le système d'ouverture (4) étant monté entre une section frontale (331) d'une selle (33) du scooter (3) et un siège pour la fixation (319) au cadre (31) du scooter (3), le système d'ouverture (4) ayant au moins une pièce de fixation supérieure ((41) et une pièce de fixation inférieure (42) et un ensemble de conduite (43); la pièce de fixation supérieure (41) ayant une structure fixe (411), la structure fixe (411)formant des trous de fixation (4111) une section de couplage pivotant (412) s'étendant d'une extrémité de la structure fixe (411) de la pièce de fixation supérieure (41), la section de couplage pivotant (412) ayant une extrémité inférieure formant un trou de pivot (4121), la structure fixe (411) de la pièce de fixation (41) formant un trou de connexion (413) à la connexion de celui-ci avec la section de couplage pivotante (412) ; la pièce de fixation inférieure (42) ayant une structure fixe (421), la structure fixe (421) formant des trous de fixations (4211), une section de couplage pivotante (422) s'étendant d'une extrémité de la structure fixe (421) de la pièce de fixation inférieure (42), la section de couplage pivotante (422) formant un trou de connexion (4221) et un trou de pivot (4222), la pièce de fixation supérieure (41) et la pièce de fixation supérieure (42) étant montée de façon pivotante l'une à l'autre par un tourillon (46) reçu au travers des trous pivotants (4121, 4222) ; la partie terminale supérieure (431) de l'ensemble de conduite (43) étant raccordée par une première barre de raccord (44) au trou de connexion (413) de la pièce de fixation supérieure (41), la partie terminale inférieure (432) de l'ensemble de conduite (43) étant raccordée à une seconde barre de raccord (45) au trou de connexion (4221) de la pièce de fixation inférieure (42) ; **caractérisée par** ce que le tourillon (46) est reçu à travers les trous pivotants (4121,4222) de la pièce de fixation supérieure (41) et de la pièce de fixation inférieure (42) et le tourillon (46) définit un point pivotant central (A1) qui est constitué de façon a former une ligne horizontale substantielle avec un point de raccord inférieur (B1) définit par le point de raccord de la partie terminale inférieure (432) de l'ensemble de conduite (43) avec le trou de connexion (4221) de la pièce de fixation inférieure(42).

2. Le scooter (3) est, selon la revendication 1, auquel est fixée la structure (411) de la pièce de fixation supérieure (41) sensiblement parallèle à la structure fixée (421) de la pièce de fixation inférieure (42).

3. Le scooter (3) est, selon la revendication 1, auquel la section de couplage pivotante(412) de la pièce de fixation supérieure (41), conçue pour s'agrandir à partir de l'extrémité de structure fixe (411) afin de révéler une configuration en inclinaison externe.

4. Le scooter (3) est, selon la revendication 1, auquel l'ensemble de conduite (43) comporte deux cylindres hydrauliques ou deux cylindres pneumatiques.

5. Le scooter (3) est, selon la revendication 1, auquel la selle(34) n'est pas couplée au bac de stockage(34) du scooter (3).
